# FASCICULE DE BREVET EUROPEEN

(11) **EP 3 814 289 B1**
(45) Date de publication et mention de la délivrance du brevet: **19.07.2023**
(21) Numéro de dépôt: 19746125.4
(22) Date de dépôt: 25.06.2019
(51) Int. Cl.: C03C 17/00, C03C 23/00

(54) **PROCÉDÉ DE FABRICATION D'UN VITRAGE FEUILLETÉ EVITANT LE COLLAGE DE L'EMAIL SUR LE CONTRE-VERRE**
VERFAHREN ZUR HERSTELLUNG VON VERBUNDGLAS OHNE EMAILLIERUNG AM RÜCKGLAS
METHOD FOR PRODUCING LAMINATED GLAZING WITHOUT ENAMEL STICKING TO THE BACK-GLASS

(30) Priorité: 29.06.2018 FR 1870775
(43) Date de publication de la demande: 05.05.2021
(73) Titulaire: Saint-Gobain Glass France, 92400 Courbevoie (FR)
(72) Inventeur: JAMART, Juliette, 60200 COMPIEGNE (FR); CHANE-PANE, Valérie, 97490 SAINTE-CLOTILDE (FR); DUMOTIER, Leila, 60280 MARGNY LES COMPIEGNE (FR)
(74) Mandataire: Saint-Gobain Recherche
(86) Numéro de dépôt international: PCT/FR2019/051562
(87) Numéro de publication internationale: WO 2020/002825

(56) Documents cités:
- US-A- 5 660 893
- US-A- 5 677 064
- US-A- 5 759 220
- US-A1- 2005 003 210

## Description

La présente invention a trait aux vitrages feuilletés tels que pare-brise automobiles constitués de deux feuilles de verre bombées collées au moyen d'une couche adhésive intercalaire en thermoplastique transparent du type polyvinylbutyral (PVB).

Couramment, une au moins de ces deux feuilles de verre comprend un revêtement périphérique noir. Celui-ci a plusieurs fonctions : cacher la liaison adhésive entre le pare-brise et la carrosserie de l'automobile, protéger l'adhésif organique du rayonnement ultra-violet, ainsi qu'une fonction esthétique car il est dans le champ de vision de l'occupant de l'automobile.

Il est habituel de numéroter les faces des feuilles de verre du vitrage feuilleté en partant de la face en contact avec l'atmosphère extérieure, numérotée 1. Ainsi, un pare-brise à deux feuilles de verre comporte les faces 1, 2, 3 et 4, cette dernière étant en contact avec l'habitacle de l'automobile. Le procédé de fabrication des pare-brise comprend habituellement la sérigraphie du revêtement sur l'une des deux feuilles de verre ou les deux : sur la face 2, la face 3, la face 4 ou les faces 2 et 4 par exemple.

Le revêtement est déposé avant l'opération de bombage des feuilles de verre, qui consiste à chauffer les deux feuilles de verre ensemble dans un four à des températures de l'ordre de 610 °C par exemple. Le revêtement déposé doit être compatible avec le procédé de bombage du verre. En cas d'un revêtement en face 2 respectivement 3, cela signifie que le revêtement ne doit pas coller au contre-verre (face 3, respectivement 2).

Le revêtement peut consister en émail, qui comprend des pigments, frittes de verre, composés organiques, solvants... Afin d'éviter le collage du revêtement pendant l'opération de bombage, l'émail doit préalablement être pré-cuit à haute température au moins égale à 450 °C pour des feuilles de verre de 0,7 à 3,15 mm d'épaisseur. Cela nécessite l'utilisation d'un four de pré-cuisson. Le passage dans ce four peut occasionner des casses sur la face imprimée du revêtement. Cette opération de pré-cuisson peut donc être une cause d'arrêt de production et de perte de productivité. Une augmentation significative du pourcentage de rebut (1-2 % avec des crises à 6-7 %) peut être observée pour dégradation des propriétés optiques due à des différences d'émissivité entre les zones émaillées et non émaillées lors de la pré-cuisson. Les coûts et surtout la consommation d'énergie liés à la pré-cuisson sont élevés.

Un inconvénient des revêtements en émail est également la présence de composés organiques et de solvants pouvant soulever des questions de toxicité.

US 5 759 220A décrit un procédé de fabrication d'un vitrage feuilleté comprenant une première et une seconde feuilles de verre, dans lequel la face de la première feuille de verre destinée à être orientée vers la seconde est imprimée avec un liquide qui est séché à une température n'excédant pas 400 °C, puis la première et la seconde feuilles de verre sont bombées ensemble en contact l'une avec l'autre dans leur position relative de destination dans le vitrage feuilleté, par chauffage à une température de ramollissement du verre.

L'invention s'est donc donné pour tâche de trouver un procédé de fabrication de vitrages feuilletés imprimés et bombés évitant tout collage du revêtement imprimé sur le contre-verre, en diminuant la consommation d'énergie, en supprimant l'opération de pré-cuisson dans un four spécifique, en diminuant voire en supprimant les composés organiques et solvants potentiellement toxiques.

Cet objectif a été atteint par l'invention qui, en conséquence, a pour objet un procédé de fabrication d'un vitrage feuilleté comprenant au moins une première et une seconde feuilles de verre, dans lequel la face de la première feuille de verre destinée à être orientée vers la seconde est imprimée avec un émail liquide qui est séché à une température n'excédant pas 400 °C, puis la première et la seconde feuilles de verre sont bombées ensemble en contact l'une avec l'autre dans leur position relative de destination dans le vitrage feuilleté, par chauffage à une température de ramollissement du verre, caractérisé en ce que l'émail liquide est une peinture aqueuse au silicate comprenant une poudre réfractaire de pigments et une poudre de liant aux silicates, en l'absence de fritte de verre, et en ce que le rapport en masse des pigments sur les silicates est supérieur à 1.

La peinture selon l'invention ne colle pas au contre-verre au bombage des deux feuilles de verre, en l'absence d'une pré-cuisson à température relativement élevée d'au moins 450 °C. Selon l'invention, un séchage préalable de la peinture à température beaucoup plus modérée, voire à température ambiante pendant 24 heures, suffit à garantir l'absence de collage au contre-verre. En l'absence de fritte de verre dans l'émail liquide d'impression, ce séchage à température modérée permet d'obtenir la couleur désirée d'émail, en particulier noire.

Les composés organiques et solvants potentiellement toxiques sont en proportions diminuées, mineures à nulles.

Selon des caractéristiques préférées du procédé de l'invention :
la fraction organique de la peinture comprend au moins 80 % en masse d'eau, éventuellement au moins un solvant organique et des additifs tels qu'épaississants, tensioactifs ; la fraction organique coïncide avec la totalité de la fraction liquide, l'extrait sec de la peinture est exclusivement minéral ;
la peinture comprend de 15 à 50 % en masse de fraction organique ;
les pigments comprennent Fe₂O₃, CuO et/ou MnO ;
l'opération consistant à imprimer la première feuille de verre est effectuée par sérigraphie ;
l'émail liquide est séché à une température n'excédant pas 350 °C ;
les feuilles de verre sont bombées par chauffage à une température au moins égale à 600 °C pendant au moins 5 min,
en particulier par affaissement par gravité.

L'invention sera mieux comprise à la lumière de quatre exemples de peintures suivants.

### Exemple

Quatre peintures aqueuses au silicate sont préparées à partir de mélanges de poudres exclusivement minérales constituant l'extrait sec de ces peintures. Ces quatre poudres sont analysées par spectroscopie de fluorescence de rayonnement X au moyen d'un spectromètre commercialisé par la Société Malvern Panalytical Ltd (UK) sous la référence MagiX PRO, et à l'aide du programme semi-quantitatif OMNIAN de la même Société.

Seul le bore de ces poudres est dosé par spectrométrie à plasma à couplage inductif (ICP) au moyen d'un spectromètre Vista-PRO^{®} de la Société Varian Inc (USA).

Les résultats sont consignés en % en masse dans le Tableau 1 ci-dessous. ND signifie : non détecté.

**[Tableau 1]**

| Peinture N° | 1 | 2 | 3 | 4 |
|---|---|---|---|---|
| SiO₂ | 35,1 | 29,9 | 17,3 | 34,1 |
| MnO₂ | 21,9 | 26,4 | 18,3 | 11,3 |
| CuO | 15,8 | 17,9 | 0,2 | 0,2 |
| Na₂O | 12,0 | 9,9 | 0,5 | 0,6 |
| Fe₂O₃ | 7,1 | 8,7 | 50,1 | 31,7 |
| K₂O | 5,1 | 4,4 | 10,4 | 20,9 |
| Al₂O₃ | 2,0 | 1,6 | 1,2 | 0,8 |
| SO₃ | 0,2 | 0,2 | 0,1 | <0,1 |
| CaO | 0,1 | <0,1 | <0,1 | <0,1 |
| TiO₂ | <0,1 | <0,1 | <0,1 | <0,1 |
| P₂O₅ | ND | <0,1 | 0,3 | <0,1 |
| ZnO | ND | <0,1 | <0,1 | <0,1 |
| ZrO₂ | ND | <0,1 | ND | ND |
| BaO | ND | ND | 0,3 | ND |
| Cr₂O₃ | ND | ND | 0,1 | <0,1 |
| Co₃O₄ | ND | ND | 0,1 | ND |
| NiO | ND | ND | <0,1 | <0,1 |
| B₂O₃ | <0,05 | <0,05 | <0,05 | <0,05 |

Dans chacune des quatre peintures, les pigments sont susceptibles d'être constitués exclusivement de CuO, Fe₂O₃ et/ou MnO₂.

On fabrique les peintures par ajout à chacune des quatre poudres d'une fraction liquide constituée d'eau à plus de 80 % en masse, et de quantités mineures d'additifs (épaississants habituels, tensioactifs...) et éventuellement d'autres solvants.

Dans le Tableau 2 ci-dessous, les quantités sont, à l'instar de celles du Tableau 1, en % en masse. La proportion d'organiques (fraction liquide) est évaluée par analyse thermogravimétrique.

**[Tableau 2]**

| Peinture N° | 1 | 2 | 3 | 4 |
|---|---|---|---|---|
| Organiques | 40 | 37 | 27 | 39 |
| Pigments dans l'extrait sec | 44,8 | 53 | 68,6 | 43,2 |
| Pigments dans la peinture liquide | 27 | 33 | 50 | 26 |
| Pigments/Silicates | 0,82 | 1,12 | 2,22 | 0,75 |
| Absence de collage | NOK | OK | OK | NOK |
| Eléments constituant les pigments | Cu, Fe, Mn | Cu, Fe, Mn | Fe, Mn | Fe, Mn |

La ligne Pigments/Silicates exprime le rapport de masse de ces deux groupes de composés. Les pigments sont constitués des poudres réfractaires de l'extrait sec (voir Tableau 1), à savoir CuO, Fe₂O₃, et MnO₂, et les silicates de tous les autres constituants de l'extrait sec: les liants.

On utilise deux feuilles de verre sodocalcique flotté de 500 mm X 300 mm X 2,1 mm. L'une des deux feuilles de verre est imprimée avec chacune des quatre peintures par sérigraphie, notamment à sa périphérie et aux coins de la feuille. On laisse sécher la peinture 24 h à l'air ambiant, opération suivie ou non d'un passage dans un four à 300 °C pendant 180 s, ou bien, selon un troisième mode de séchage, on passe seulement la feuille de verre dans un four à 300 °C pendant 180 s.

La feuille de verre peinte est alors appariée à l'autre feuille de verre non peinte de sorte que sa surface peinte soit en contact avec cette autre feuille de verre. On effectue le bombage des deux feuilles de verre ainsi en contact l'une avec l'autre par chauffage à 640 °C pendant 10 min dans un four ; le bombage se produit par affaissement par gravité, au ramollissement du verre.

Les deux feuilles de verre ont ensuite vocation à être d'abord séparées, puis collées l'une à l'autre au moyen d'une couche adhésive intercalaire telle qu'en polyvinylbutyral (PVB) . Quand elles sont ainsi séparées, la peinture en restant collée sur le contre-verre, peut casser au moins un coin d'une des deux feuilles de verre ou des deux, et/ou être transférée au moins en partie sur le contre-verre ; ce phénomène est désigné par les termes « collage de la peinture ».

Dans le tableau 2, ce collage est signalé à la ligne « Absence de collage » par l'évaluation NOK. L'évaluation OK désigne à l'inverse une absence de coin cassé de feuille de verre, et de transfert de peinture sur le contre-verre. Cette évaluation, pour chacune des quatre peintures, est indépendante de celui des trois modes de séchages que l'on a choisi. Il y a absence de collage si, dans la peinture, la masse de pigments est supérieure à celle des liants silicates.

## Revendications

1. Procédé de fabrication d'un vitrage feuilleté comprenant au moins une première et une seconde feuilles de verre, dans lequel la face de la première feuille de verre destinée à être orientée vers la seconde est imprimée avec un émail liquide qui est séché à une température n'excédant pas 400 °C, puis la première et la seconde feuilles de verre sont bombées ensemble en contact l'une avec l'autre dans leur position relative de destination dans le vitrage feuilleté, par chauffage à une température de ramollissement du verre, **caractérisé en ce que** l'émail liquide est une peinture aqueuse au silicate comprenant une poudre réfractaire de pigments et une poudre de liant aux silicates, en l'absence de fritte de verre, et **en ce que** le rapport en masse des pigments sur les silicates est supérieur à 1.

2. Procédé selon la revendication 1, **caractérisé en ce que** la fraction organique de la peinture comprend au moins 80 % en masse d'eau, éventuellement au moins un solvant organique et des additifs tels qu'épaississants, tensioactifs.

3. Procédé selon l'une des revendications 1 ou 2, **caractérisé en ce que** la peinture comprend de 15 à 50 % en masse de fraction organique.

4. Procédé selon l'une des revendications 1 à 3, **caractérisé en ce que** les pigments comprennent Fe₂O₃, CuO et/ou MnO.

5. Procédé selon l'une des revendications 1 à 4, **caractérisé en ce que** l'opération consistant à imprimer la première feuille de verre est effectuée par sérigraphie.

6. Procédé selon l'une des revendications 1 à 5, **caractérisé en ce que** l'émail liquide est séché à une température n'excédant pas 350 °C.

7. Procédé selon l'une des revendications 1 à 6, **caractérisé en ce que** les feuilles de verre sont bombées par chauffage à une température au moins égale à 600 °C pendant au moins 5 min.

8. Procédé selon l'une des revendications 1 à 7, **caractérisé en ce que** les feuilles de verre sont bombées par affaissement par gravité.

## Patentansprüche

1. Verfahren zum Herstellen einer Verbundverglasung, umfassend mindestens eine erste und eine zweite Glasscheibe, wobei die Fläche der ersten Glasscheibe, die dafür bestimmt ist, in Richtung der zweiten ausgerichtet zu sein, mit einem flüssigen Email bedruckt wird, das bei einer Temperatur, die 400 °C nicht überschreitet, getrocknet wird, anschließend die erste und die zweite Glasscheibe in Berührung miteinander in ihrer relativen Zielposition in der Verbundverglasung durch Erhitzen auf eine Glaserweichungstemperatur gemeinsam gebogen werden, **dadurch gekennzeichnet, dass** das flüssige Email ein wässriger Silikatanstrich ist, umfassend ein feuerfestes Pigmentpulver und ein Silikatbindemittelpulver, in Abwesenheit von einer Glasfritte, und **dass** das Masseverhältnis von Pigmenten zu den Silikaten über 1 beträgt.

2. Verfahren nach Anspruch 1, **dadurch gekennzeichnet, dass** die organische Fraktion des Anstrichs mindestens 80 Masse-% Wasser, optional mindestens ein organisches Lösungsmittel und Zusatzstoffe wie zum Beispiel Quellmittel, Tenside umfasst.

3. Verfahren nach einem der Ansprüche 1 oder 2,
**dadurch gekennzeichnet, dass** der Anstrich 15 bis 50 Masse-% organische Fraktion umfasst.

4. Verfahren nach einem der Ansprüche 1 bis 3,
**dadurch gekennzeichnet, dass** die Pigmente Fe₂O₃, CuO und/oder MnO umfassen.

5. Verfahren nach einem der Ansprüche 1 bis 4,
**dadurch gekennzeichnet, dass** der Vorgang, der daraus besteht, die erste Glasscheibe zu bedrucken, durch Siebdruck durchgeführt wird.

6. Verfahren nach einem der Ansprüche 1 bis 5,
**dadurch gekennzeichnet, dass** das flüssige Email bei einer Temperatur, die 350 °C nicht überschreitet, getrocknet wird.

7. Verfahren nach einem der Ansprüche 1 bis 6,
**dadurch gekennzeichnet, dass** die Glasscheiben durch Erhitzen auf eine Temperatur, die mindestens gleich 600 °C beträgt, während mindestens 5 min gebogen werden.

8. Verfahren nach einem der Ansprüche 1 bis 7,
**dadurch gekennzeichnet, dass** die Glasscheiben durch Nachgeben durch Schwerkraft gebogen werden.

## Claims

1. A process for manufacturing a laminated glazing comprising at least a first glass sheet and a second glass sheet, wherein the face of the first glass sheet intended to be oriented toward the second is printed with a liquid enamel which is dried at a temperature not exceeding 400°C, then the first and the second glass sheets are bent together in contact with one another in their relative position of destination in the laminated glazing, by heating at a softening temperature of the glass, **characterized in that** the liquid enamel is an aqueous silicate paint comprising a refractory powder of pigments and a silicate binder powder, in the absence of glass frit, and **in that** the weight ratio of pigments to silicates is greater than 1.

2. The process as claimed in claim 1, **characterized in that** the organic fraction of the paint comprises at least 80% by weight of water, optionally at least one organic solvent and additives such as thickeners or surfactants.

3. The process as claimed in either of claims 1 and 2, **characterized in that** the paint comprises from 15% to 50% by weight of organic fraction.

4. The process as claimed in one of claims 1 to 3, **characterized in that** the pigments comprise Fe₂O₃, CuO and/or MnO.

5. The process as claimed in one of claims 1 to 4, **characterized in that** the operation consisting in printing the first glass sheet is carried out by screenprinting.

6. The process as claimed in one of claims 1 to 5, **characterized in that** the liquid enamel is dried at a temperature not exceeding 350°C.

7. The process as claimed in one of claims 1 to 6, **characterized in that** the glass sheets are bent by heating at a temperature at least equal to 600°C for at least 5 min.

8. The process as claimed in one of claims 1 to 7, **characterized in that** the glass sheets are bent by gravity sagging.
